# FASCICULE DE BREVET EUROPEEN

(11) **EP 0 683 205 B1**
(45) Date de publication et mention de la délivrance du brevet: **31.01.2001**
(21) Numéro de dépôt: 95401054.2
(22) Date de dépôt: 05.05.1995
(51) Int. Cl.: C08L 23/08

(54) **Revêtements de sols à base de copolymères de l'éthylène**
Fussbodenbeläge auf Basis von Äthylen-copolymeren
Floor coverings based on ethylene copolymers

(30) Priorité: 20.05.1994 FR 9406177
(43) Date de publication de la demande: 22.11.1995
(73) Titulaire: Atofina, 92800 Puteaux (FR)
(72) Inventeur: Pierrot, Jean-Michel Pierrot, F-27170 Grosley-sur-Risle (FR)

(56) Documents cités:
- EP-A- 0 168 139
- DE-A- 3 927 719
- US-A- 3 361 842

## Description

La présente invention concerne des revêtements de sols à base de copolymeres de l'ethylene.

Les produits de revêtement de sols ou murs sont très souvent à base de PVC (polychlorure de vinyle). Généralement, les compositions sont constituées de PVC, d'un plastifiant et de charges telles que le carbonate de calcium.

Elles sont faciles à préparer et se calandrent vers 120 ou 130° C pour être mises en plaques. On peut aussi les colorer en y incorporant des pigments. Cependant, ces compositions n'ont pas une bonne résistance à l'usure ou à l'abrasion et résistent mal à la rayure.

La demande de brevet BE 9100428 décrit des compositions pour revêtement de sol constituées d'EVA (copolymère éthylène / acétate de vinyle), de copolymère éthylène / acide acrylique ou éthylène / acide acrylique traité par des sels métalliques (ionomère), de charges et, éventuellement, de polyéthylène ou polypropylène. On fabrique ces revêtements de sols en utilisant les techniques utilisées pour le PVC. Le mélange se fait à 125° C, le calandrage entre 100 et 130°C.

La demande WO 9219562 décrit aussi des compositions pour revêtements de sols constituées d'EVA, de copolymères éthylène / acrylate d'alkyle, de copolymères éthylène / acide acrylique ou ionomère, de copolymère éthylène / anhydride maléique et de charges.

La demande EP 321 760 décrit des compositions pour revêtements de sols constituées d'EVA de polypropylène de charges et, éventuellement, de copolymère éthylène / propylène. Le mélange se fait à 120° - 130° C.

Les revêtements de sols fabriqués selon l'art antérieur n'ont pas une résistance suffisante à l'abrasion et à la rayure. Pour rendre ces revêtements plus résistants, il faudrait augmenter la proportion de copolymères au détriment des charges, ce qui conduit à une ignifugation plus faible. Il faudrait aussi augmenter la viscosité des copolymères, la température de mélange et de calandrage serait alors trop élevée.

On a maintenant trouvé une composition à base de copolymère de l'éthylène pour fabriquer des revêtements de sols tout en utilisant les techniques pour les revêtements à base de PVC. Les revêtements ainsi fabriqués possèdent une résistance à l'usure et à la rayure bien supérieure à celle des revêtements de l'art antérieur.

L'art antérieur EP 168139 ne cite pas cette application et ne décrit que la résistance à la température et l'adhérence (p. 2 lignes 32 - 34 et les exemples). Il décrit l'usage des compositions réticulées laminées par exemple avec des couches de Téflon (p. 25 ligne 10), de verre, cellophane, etc... (page 27 lignes 6 - 8). Rien ne suggère que les compositions de EP 168139 aient une résistance à l'abrasion.

US 3361842 décrit des compositions de moulage comprenant (i) un copolymère de l'éthylène d'une alpha oléfine et d'un monomère insaturé porteur d'un groupe carboxylique et (ii) un polyépoxyde tel que le diglycidyl éther du bisphénol (A).

La présente invention concerne donc des revêtements de sols à base de copolymères et comprenant :
a) 1 à 20 parties d'au moins un copolymère :
   - de l'éthylène
   - du (méth)acrylate de glycidyle,
   - et éventuellement de l'acétate de vinyle ou d'un ou plusieurs (méth)acrylates d'alkyle
b) 5 à 20 parties d'au moins un copolymère :
   - de l'éthylène,
   - de l'anhydride maléique,
   - et éventuellement de l'acétate de vinyle ou d'un ou plusieurs (méth)acrylates d'alkyle.
c) 30 à 70 parties de charges,
d) 0 à 30 parties d'un ou plusieurs copolymères choisis parmi :
   - les copolymères de l'éthylène et de l'acétate de vinyle,
   - les copolymères de l'éthylène et d'un ou plusieurs (méth)acrylates d'alkyle.
      La tenue à l'abrasion selon DIN 53 516 étant inférieure à 300 mm³ et la tenue à la rayure,mesurée par la charge sur une aiguille en diamant, est supérieure à 150 g.

Les revêtements de sol ont une abrasion selon DIN 53516 de préférence inférieure à 250. Ils ont aussi une tenue à la rayure de préférence de 200 à 250 g. Elle est mesurée par la charge sur une aiguille en diamant.

Le groupement alkyle du (méth)acrylate d'alkyle entrant dans le copolymère d) a jusqu'à 10 atomes de carbone et peut être linéaire, ramifié ou cyclique. A titre d'illustration du (méth)acrylate d'alkyle, on peut citer notamment l'acrylate de n-butyle, l'acrylate d'isobutyle, l'acrylate d'éthyl-2 hexyle, l'acrylate de cyclohexyle, le méthacrylate de méthyle, le méthacrylate d'éthyle. Parmi ces (méth)acrylates, on préfère l'acrylate d'éthyle, l'acrylate de n-butyle et le méthacrylate de méthyle.

Les copolymères a) et b) peuvent aussi comprendre de l'acétate de vinyle ou un ou plusieurs (méth)acrylates d'alkyle. Les (méth)acrylates d'alkyle peuvent être choisis dans la même famille que ceux des copolymères d) avec les mêmes préférences.

Le copolymère a) est avantageusement un copolymère de l'éthylène d'un (méth)acrylate d'alkyle et de méthacrylate de glycidyle contenant en poids 2 à 10 %, de préférence 6 à 8 %, de méthacrylate de glycidyle et au moins 50 % d'éthylène.

Le copolymère b) est avantageusement un copolymère de l'éthylène, d'un (méth)acrylate d'alkyle et d'anhydride maléique contenant en poids 2 à 3 % d'anhydride maléique et au moins 50 % d'éthylène.

Les copolymères d) contiennent avantageusement 5 à 40 % en poids d'acétate de vinyle ou de (méth)acrylate d'alkyle et de préférence 20 à 35 %.

Les charges c) peuvent être du kaolin, du carbonate de calcium, du carbonate précipité et/ou des charges plus spécifiquement anti-feu telles que les hydroxydes d'aluminium ou de magnésium.

Selon les utilisations des revêtements de sols, il peut être nécessaire qu'ils présentent une bonne résistance au feu. Ces charges c) sont connues en elles-mêmes mais la demanderesse a découvert que les compositions de l'invention pouvaient en contenir d'importantes quantités sans nuire à leurs propriétés mécaniques, ni rendre leur fabrication difficile.

On peut incorporer ces charges jusqu'à obtenir des indices d'oxygène au-delà de 30 et avantageusement entre 30 et 35.

On ne sortirait pas du cadre de l'invention en y incorporant des additifs usuels tels que des agents glissants (stéarates, amines grasses), des agents de protection (chaleur, anti UV), des pigments ou des colorants.

Les revêtements de sols sont fabriqués par calandrage selon les techniques connues, on peut utiliser les mêmes techniques que pour les revêtements à base de PVC.

La composition des revêtements de la présente invention est obtenue de façon connue par toute technique de mélange à l'état fondu telle que par exemple l'extrusion ou le mélangeur interne.

Les quantités de fonction époxydes nécessaires apportées par a) et de fonction réactives nécessaires apportées par b) sont déterminées par la résistance à l'abrasion et à la rayure des revêtements de sols. Plus le nombre de ces fonctions est élevé, plus le matériau est résistant à l'abrasion et à la rayure.

Le rapport entre le nombre de fonctions époxydes apportées par a) et le nombre de fonctions réactives apportées par b) peut être compris entre 0,5 et 2 et de préférence voisin de la stoechiométrie, soit 1.

Par exemple, si le comonomère de b) est l'anhydride maléique, la stoechiométrie est de 2 fonctions époxydes pour un anhydride maléique.

La réaction entre l'époxyde du copolymère a) et la fonction réactive du copolymère b) est lente à la température ambiante et jusqu'à 180-190° C, puis la réaction se poursuit lentement à température ambiante pendant deux semaines environ. Cette augmentation de la masse molaire permet d'obtenir des résistances à l'abrasion et à la rayure supérieures à celles de l'art antérieur tout en utilisant les températures habituelles pour le PVC chargé c'est-à-dire vers 120° C.

Pour obtenir un revêtement présentant une bonne résistance à l'abrasion ou au frottement et qui ne comprend pas les copolymères a) et b) de la présente invention, il faudrait des compositions de plus haute viscosité nécessitant des températures de malaxage et de calandrage élevées telles que 160 ou 180° C, ce qui est incompatible avec les matériels utilisés pour les revêtements de sols à base de PVC. On peut alors obtenir une résistance à l'abrasion mais la résistance à la rayure n'est pas bonne. Les revêtements de l'invention présentent l'avantage inattendu d'une bonne résistance à l'abrasion et à la rayure.

On peut aussi ajouter des catalyseurs pour accélérer cette réaction.

Parmi les composés capables d'accélérer la réaction entre l'époxyde de a) et la fonction réactive de b), on peut citer notamment :
- des amines tertiaires, telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-1-imidazole, la tétraméthylguanidine, la triéthylènediamine, la tétraméthylhydrazine, la N,N-diméthylpipérazine, la N,N,N',N'-tétraméthyl-1,6-hexanediamine, un mélange d'amines tertiaires ayant de 16 à 18 atomes de carbone connues sous l'appellation de diméthylsuifamines,
- des phosphines tertiaires telles que la triphénylphosphine,
- des alkyldithiocarbamates de zinc.

En utilisant un catalyseur, on peut obtenir par exemple, selon les quantités, une réaction complète en 2 heures à 160° C.

Il est préférable de chauffer la composition des revêtements de l'invention contenant le catalyseur après le calandrage. On peut utiliser un tunnel chauffant ou tout dispositif équivalent.

Les quantités des différents copolymères et charges sont choisies par l'homme de métier en fonction des propriétés recherchées. Il peut ajuster les quantités et aussi choisir des copolymères ayant diverses proportions de comonomères.

Dans les exemples suivants, la résistance à la rayure est mesurée selon une méthode propre à la demanderesse. Une aiguille à pointe diamant est chargée par des poids de 10 g en 10 g. Elle se promène sur la dalle et lorsqu'on observe une rayure, on note la charge en grammes.

Dans les exemples, les pourcentages et les parties sont en poids sauf indications contraires.

### Exemple 1

On a mélangé :
- 4 parties d'un copolymère d'éthylène / méthacrylate de méthyle 20 % / méthacrylate de glycidyle 8 % /
- 12 parties d'un copolymère éthylène / méthacrylate de méthyle 25 % / anhydride maléique 2 %.
- 20 parties d'un copolymère éthylène / méthacrylate de méthyle 24 %.
- 15 parties de kaolin
- 15 parties de craie
- 33,3 parties d'aluminium trihydrate
- 0,7 parties de stéarate de calcium.

On a calandré à 120°C, puis après quelques jours, on a mesuré :

| | |
|---|---|
| Abrasion selon DIN 53516 | 210-250 mm³ |
| Tenue à la rayure | 300 à 250 g |
| Indice d'oxygène | 30 - 32 |

### Exemple 2 (comparatif)

1) On a préparé une composition ne comportant ni copolymère ayant un époxyde, ni copolymère ayant une fonction réactive avec l'époxyde. La quantité de charges n'est pas la même que dans l'exemple 1 parce qu'il a été impossible d'en mettre autant.
On a mélangé :
28 parties d'un mélange d'EVA à 30 % d'acétate de vinyle et de copolymère éthylène / acrylate de méthyle à 30 % d'acrylate
12 parties de polypropylène
28 parties de kaolin
31,4 parties de craie
0,1 parties de vulkanox R
0,5 % d'éthylène bis stéaramide (agent glissant)

On a calandré à 160° C.
On a mesuré :

| | |
|---|---|
| Abrasion DIN 53516 | 280 - 350 mm³ |
| Tenue à la rayure | 80 - 90 g |
| Indice d'oxygène | 24 - 27 |

2) On a reproduit 1) en utilisant comme charges :
15 parties de kaolin
15 parties de craie
29,4 parties d'aluminium trihydrate.

On a obtenu les mêmes résultats sauf un indice d'oxygène de 28 - 30.

## Revendications

1. Revêtements de sols à base de copolymères et comprenant :
a) 1 à 20 parties d'au moins un copolymère :
- de l'éthylène
- du (méth)acrylate de glycidyle,
- et éventuellement de l'acétate de vinyle ou d'un ou plusieurs (méth)acrylates d'alkyle
b) 5 à 20 parties d'au moins un copolymère :
- de l'éthylène,
- de l'anhydride maléique,
- et éventuellement de l'acétate de vinyle ou d'un ou plusieurs (méth)acrylates d'alkyle.
c) 30 à 70 parties de charges,
d) 0 à 30 parties d'un ou plusieurs copolymères choisis parmi :
- les copolymères de l'éthylène et de l'acétate de vinyle,
- les copolymères de l'éthylène et d'un ou plusieurs (méth)acrylates d'alkyle.
La tenue à l'abrasion selon DIN 53 516 étant inférieure à 300 mm³ et la tenue à la rayure mesurée par la charge sur une aiguille en diamant, est supérieure à 150 g.

2. Revêtements selon la revendication 1 caractérisés en ce qu'ils contiennent des charges ignifugeantes en quantité suffisante pour que l'indice d'oxygène soit supérieur à 30.

3. Revêtements selon l'une quelconque des revendications précédentes caractérisés en ce que l'abrasion est inférieure à 250 mm³ et la tenue à la rayure comprise entre 200 et 250 g.

## Patentansprüche

1. Bodenbeläge auf der Basis von Copolymeren, die enthalten:
a) 1 bis 20 Teile mindestens eines Copolymers von :
- Ethylen,
- Glycidyl(meth)acrylat und
- gegebenenfalls Vinylacetat oder einem oder mehreren Alkyl(meth)acrylaten, b) 5 bis 20 Teile mindestens eines Copolymers von :
- Ethylen,
- Maleinsäureanhydrid und
- gegebenenfalls Vinylacetat oder einem oder mehreren Alkyl(meth)acrylaten,
c) 30 bis 70 Teile Füllstoffe, und
d) 0 bis 30 Teile eines oder mehrerer Copolymere, die ausgewählt sind unter:
- Copolymeren von Ethylen und Vinylacetat, und
- Copolymeren von Ethylen und einem oder mehreren Alkyl(meth)acrylaten, wobei die Abriebfestigkeit nach DIN 53 516 unter 300 m³ und die unter Belastung mit einer Diamantnadel bestimmte Kratzfestigkeit über 150 g liegt.

2. Bodenbeläge nach Anspruch 1, dadurch gekennzeichnet, daß sie Flammschutzmittel in einer solchen Menge enthalten, daß der Sauerstoff-Index über 30 liegt.

3. Bodenbeläge nach einem der vorhergehenden Ansprüche, dadurch gekennzeichnet, daß die Abriebfestigkeit unter 250 mm³ und die Kratzfestigkeit im Bereich von 200 bis 250 g liegt.

## Claims

1. Floor coverings based on copolymers and comprising:
a) 1 to 20 parts of at least one copolymer:
- of ethylene
- of glycidyl (meth)acrylate
- and optionally of vinyl acetate or of one or more alkyl (meth)acrylates;
b) 5 to 20 parts of at least one copolymer:
- of ethylene
- of maleic anhydride
- and optionally of vinyl acetate or of one or more alkyl (meth)acrylates;
c) 30 to 70 parts of fillers;
d) 0 to 30 parts of one or more copolymers chosen from:
- ethylene/vinyl acetate copolymers;
- copolymers of ethylene and one or more alkyl (meth)acrylates,
the abrasion resistance according to DIN 53 516 being less than 300 mm³ and the scratch resistance, measured by the load on a diamond needle, is greater than 150 g.

2. Coverings according to Claim 1, characterized in that they contain fire-retardant fillers in sufficient amount for the oxygen index to be greater than 30.

3. Coverings according to either of the preceding claims, characterized in that the abrasion is less than 250 mm³ and the scratch resistance is between 200 and 250 g.
